(19) Europäisches Patentamt
European Patent Office
Office européen des brevets

(11) **EP 2 485 417 A1**

(12) **EUROPEAN PATENT APPLICATION**
published in accordance with Art. 153(4) EPC

(43) Date of publication:
08.08.2012 Bulletin 2012/32

(51) Int Cl.:
*H04J 13/02* (0000.00)

(21) Application number: **10789009.7**

(86) International application number:
**PCT/CN2010/074790**

(22) Date of filing: **30.06.2010**

(87) International publication number:
**WO 2010/145613 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 CN 200910178892**

(71) Applicant: **ZTE Corporation**
**Shenzhen, Guangdong 518057 (CN)**

(72) Inventor: **LIAO, Qun**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **METHOD AND DEVICE FOR SELECTING NOISE PATH**

(57) The present invention discloses a method and an apparatus for selecting a noise path. The method comprises: acquiring predetermined information, wherein the predetermined information includes energy path time delays and energy path powers, wherein the energy path time delays correspond to the energy path powers respectively; and selecting a noise path set according to the predetermined information, wherein the noise path set includes noise path time delays. The above apparatus comprises: an acquirement unit, adapted to acquire predetermined information; and a noise path selection unit, adapted to select a noise path set according to the predetermined information acquired by the acquirement module, wherein the noise path set includes noise path time delays. The present invention is capable of improving the performance of the GRAKE receiver.

start

acquiring predetermined information, wherein the predetermined information includes energy path time delays and energy path powers, wherein the energy path time delays corresponding to the energy path powers respectively — S302

selecting a noise path set according to the predetermined information — S304

end

**Fig. 3**

EP 2 485 417 A1

**Description**

**Field of the Invention**

The present invention relates to the communication field, and in particular to a method and an apparatus for selecting a noise path.

**Background of the Invention**

In a general mobile communication environment, signals between a base station and a mobile terminal propagate along several paths between a receiver and a transmitter. This phenomenon of multi-path propagation is mainly caused by the reflection of the signals on the surfaces of the objects around the transmitter and the receiver. Due to the different propagation paths, a same signal transmitted along different paths has different multi-path components whose propagation time delays and arrival angles of arriving at the receiver are different, thus leading to multi-path interference and signal fading.

The receiver used in a code division multiple access (abbreviated as CDMA) system is a receiver with multi-finger structure, wherein each finger is synchronous with a multi-path propagating along a certain single path, and each finger is a single receiver unit, the function of which is to demodulate signal component which is expected to receive. In a conventional CDMA system, quality of received signals can be improved by combining different receiver element signals using coherent or incoherent methods. Such receiver is a RAKE receiver, which can add up the multi-path energy with different time delay of a same user according to a certain rule, thus improving the performance of the receiver. The RAKE receiver can be regarded as performing time diversity combination on the expected signals. Although a conventional RAKE receiver can improve a signal noise ratio (abbreviated as SNR) of received signals, it does not consider the interference caused by other user signals, i.e., multiple access interference and inter-symbol interference. In a frequency selection channel, the performance of the RAKE receivers will deteriorate due to the influence of the inter-symbol interference and the multiple access interference.

With the rapid development of the mobile communication, people have increasingly higher requirements on the quality of the mobile communication and the service types provided by the mobile communication. In order to make the WCDMA system to support high-rate transmission in the uplink direction, the 3GPP newly adds an enhanced-dedicated channel (abbreviated as E-DCH) in the R6 version and allows the minimum spreading factor SF to be 2. When the spreading factor becomes smaller, performance of physical channels will become worse due to the multi-path fading. At the same time, the interference among multiple users will also lead to the deterioration of performance of uplink receivers. Additionally, after the R7 version of the 3GPP, the 16QAM technology will also be applied in the system. Due to the increase of transmission block, the gain of the conventional RAKE receivers can not effectively counteract the inter-symbol interference caused by the multi-path interference, thereby causing that the high-rate transmission can not be performed under a fading environment.

In recent years, a general-purpose RAKE (GRAKE) receiver is developed to better restrain interference, which improves the performance of the receiver by adding combination weight. In fact, comparing with the conventional RAKE receiver, the GRAKE receiver can optimize SNR of received signals by adding additional fingers, thus obtaining the improvement of the performance. These additional fingers are generally referred to as noise paths, therefore how to select a noise path is the key of improving the performance of the GRAKE receiver.

The inventors found out that the performance of the GRAKE receiver using the prior noise path selecting method was relatively low which affected performance of a system.

**Summary of the Invention**

The present invention is proposed aiming at the problem existing in the prior art that the performance of the GRAKE receiver using the existing noise path selecting method is relatively low. For this purpose, the main object of the present invention is to provide an improved method and apparatus for selecting a noise path, so as to solve at least one of the above problems.

In order to achieve the above object, a method for selecting a noise path is provided according to one aspect of the present invention.

The method for selecting a noise path according to the present invention comprises: acquiring predetermined information, wherein the predetermined information includes energy path time delays and energy path powers, wherein the energy path time delays correspond to the energy path powers respectively; and selecting a noise path set according to the predetermined information, wherein the noise path set includes noise path time delays.

Preferably, the step of selecting the noise path set according to the predetermined information includes: sorting the energy path time delays according to the energy path power; and selecting the noise path set according to the result of the sorting and the predetermined information.

Preferably, the step of sorting the energy path time delays according to the energy path power includes: sorting the energy path time delays according to the energy path power to obtain the sorted energy path time delays $d_E(1)......d_E(L)$, wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

Preferably, the step of selecting the noise path set according to the result of the sorting and the predetermined information includes: a calculation and selection step: calculating $\Delta=d_E(1)+d_E(n_1)-d_E(n_2)$, adding the $\Delta$ into the noise path set in the case that the $\Delta$ meets a predetermined condition, wherein $n_1=1$, $n_2=1$ and the predetermined condition comprises: an absolute value of the difference between the $\Delta$ and the energy path time delay or the noise path time delay in the noise path set being greater than or equal to a predetermined time delay difference; and a condition control step: if $n_2 > L$ or the number of elements in the noise path set is $N$, ending the condition control step; otherwise, $n_1 = n_1+1$, wherein if $n_1>L$, then $n_2 = n_2+1$ and $n_1 = 1$, and it returns to the calculation and selection step, and if $n_1 <= L$, it returns to the calculation and selection step, wherein the $N$ is the number of the noise paths required to be selected.

Preferably, the predetermined time delay difference is one chip.

In order to achieve the above object, an apparatus for selecting a noise path is provided according to another aspect of the present invention.

The apparatus for selecting a noise path according to the present invention comprises: an acquirement unit, adapted to acquire predetermined information, wherein the predetermined information comprises energy path time delays and energy path powers, wherein the energy path time delays correspond to the energy path powers respectively; and a noise path selection unit, adapted to select a noise path set according to the predetermined information acquired by the acquirement module, wherein the noise path set comprises noise path time delay.

Preferably, the noise path selection unit includes: a sort module, adapted to sort the energy path time delays according to the energy path power; and a selection module, adapted to select the noise path set according to the result of the sorting and the predetermined information.

Preferably, the sort module is particularly adapted to sort the energy path time delays according to the energy path power to obtain the sorted energy path time delays $d_E(1)......d_E(L)$, wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

Preferably, the selection module includes: a calculation and judgment sub-module, adapted to *calculate* $\Delta=d_E(1)+d_E(n_1)-dE(n_2)$, and add the $\Delta$ into the noise path set in the case that the $\Delta$ meets a predetermined condition, wherein $n_1=1, n_2=1$ and the predetermined condition comprises: an absolute value of the difference between the $\Delta$ and the energy path time delay or the noise path time delay in the noise path set being greater than or equal to a predetermined time delay difference; and a dispatch sub-module, adapted to end the flow of the dispatch sub-module in the case that $n_2 > L$ or the number of elements in the noise path set is $N$; otherwise, $n_1 = n_1+1$, wherein if $n_1 > L$, then $n_2 = n_2+1$ and $n_1 = 1$, and it triggers the calculation and judgment sub-module, and if $n_1 <= L$, then it triggers the calculation and judgment sub-module, wherein the $N$ is the number of the noise paths required to be selected.

Preferably, the predetermined time delay difference is one chip.

By virtue of the present invention, the problem that the performance of the GRAKE receiver using the existing noise path selecting method is relatively low is solved by using the method of acquiring predetermined information and selecting a noise path set according to the predetermined information. This solution for selecting a noise path is capable of improving the performance of the GRAKE receiver.

**Brief Description of the Drawings**

The drawings illustrated herein are used to provide a further understanding of the present invention, and form a part of the present application. The exemplary embodiments of the present invention and the description thereof are used to explain the present invention without unduly limiting the scope of the present invention. In the drawings:

Fig. 1 is a diagram of a system model of a CDMA communication system according to an embodiment of the present invention;
Fig. 2 is a structural schematic diagram of a GRAKE receiver according to an embodiment of the present invention;
Fig. 3 is a flow chart of a method for selecting a noise path according to an embodiment of the present invention;
Fig. 4 is a flow chart of a method for selecting a noise path according to Example 1 of the present invention;
Fig. 5 is a structural block diagram of an apparatus for selecting a noise path according to an embodiment of the present invention;
Fig. 6 is a detailed structural block diagram of a noise path selection unit according to an embodiment of the present invention; and
Fig. 7 is a structural schematic diagram of a weight calculation of a GRAKE receiver according to an embodiment of the present invention.

## Detailed Description of the Embodiments

Considering the problem existing in the prior art, the embodiments of the present invention provide a solution for selecting a noise path, which comprises: acquiring predetermined information including energy path time delay and energy path power corresponding thereto and then selecting a noise path set according to the predetermined information. This solution improves performance of a GRAKE receiver, thereby improving performance of a system.

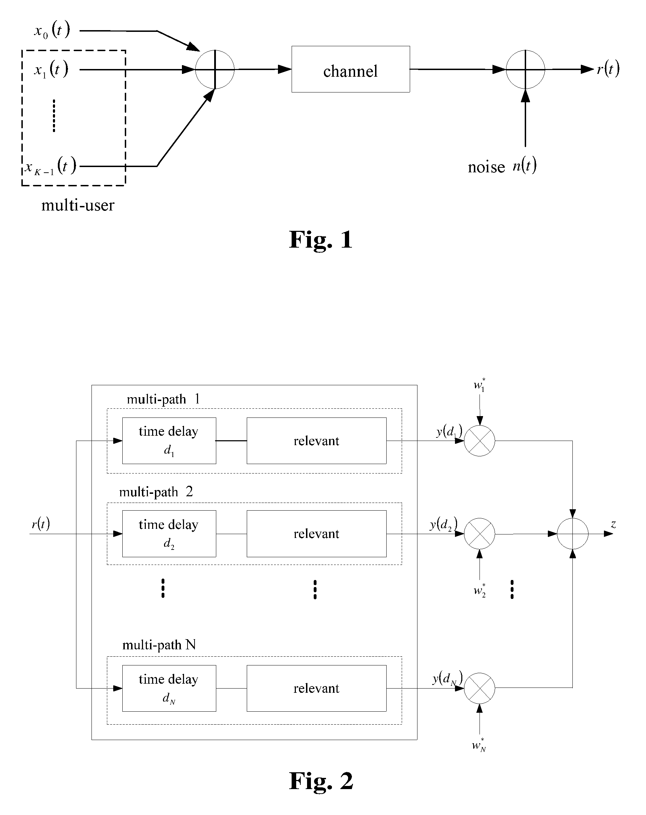

An application scenario and a specific implementation process of a GRAKE receiver will be first described briefly in combination with Figs. 1 and 2 hereinafter.

For the convenience of description, it is assumed that a user equipment only communicates with one base station. Fig. 1 is a diagram of a system model of a CDMA communication system according to an embodiment of the present invention.

A signal $x_k(i)$ transmitted from an equipment of a user $k$ can be represented as:

$$x_k(t) = \sqrt{E_k} \sum_{i=-\infty}^{\infty} s_k(i) a_{k,i}(t - iT) \qquad (1)$$

wherein $s_k(i)$ is the $i^{th}$ data symbol of the user $k$, whose corresponding spreading code is $a_{k,i}(t)$, $E_k$ is symbol average energy, and $T$ is a symbol period. The $a_{k,i}(t)$ is the result obtained by performing a convolution operation of a spreading code sequence $c_{k,i} = [c_{k,i}(0), c_{k,i}(1),...,c_{k,i}(N-1)]^T$ of the $i^{th}$ data symbol of the user $k$ and a pulse forming sequence $p(t)$, the calculation formula of which is as shown in formula (2).

$$a_{k,i}(t) = \frac{1}{\sqrt{N}} \sum_{j=0}^{N-1} c_{k,i}(j) p(t - jT_c) \qquad (2)$$

wherein, $T_c$ is chip period.

After a multi-path transmission, a received signal can be represented as:

$$r(t) = \sum_{l=0}^{L-1} g_l x_0(t - \tau_l) + \sum_{k=1}^{K-1} \sum_{l=0}^{L-1} g_l x_k(t - \tau_l) + n(t) \qquad (3)$$

wherein, the $L$ and the $K$ represent the total number of channels and the total number of users respectively, the $g_l$ and the $\tau_l$ are a fading coefficient and a time delay of the $l$ th channel respectively, and the $n(t)$ is additive white Gaussian noise, the unilateral power spectrum density of which is $N_0$.

The GRAKE receiver has similar implementation structure with the conventional RAKE receiver, except that the weight calculation module and the multi-path selection module are different from those in the conventional RAKE receiver. A structure of the GRAKE receiver is as shown in Fig. 2. As shown in Fig. 2, there are $N$ paths, with each path corresponding to a different received signal delay, and a judgment statistic amount can be obtained after the combination of the outputs of individual paths.

As to a given expected signal, a spreading code correlator of each path completes a de-spreading process and outputs the result. $y(d_j)$ represents a de-spreading value of all the paths, wherein $j = 1,2,...,N$. An output of the receiver can be obtained by combining these de-spreading values according to combination coefficients $\mathbf{w} = [w_1, w_2,..., w_N]^T$ of individual paths, which is as shown in formula (4):

$$z = \sum_{j=1}^{J} w_j^\star y(d_j) = \mathbf{w}^H \mathbf{y} \qquad (4)$$

wherein, $\mathbf{y} = [y(d_1), y(d_2),...,y(d_J)]^T$.

As to the conventional RAKE receiver, the total number of paths is equal to the total number of channels, and the weight of a multi-path combination is a channel fading factor. Comparing Fig. 2 and the formula (3), it can be seen that, as to $j = 1,2,...,L$, there are $N = L$, $d_j = \tau_{j-1}$, $w_j = g_{j-1}$. The path meeting the above relations is generally referred to as an energy path, which corresponds to channel data with signal energy.

Comparing with the conventional RAKE receiver, in the GRAKE receiver, some noise paths are added, thus causing that the total number of paths of the entire receiver is greater than the total number of channels, i.e. $N > L$. Also, in the GRAKE receiver, the weight of a multi-path combination is different from a channel fading factor.

An output vector of each path is rewritten as:

$$\mathbf{y} = \mathbf{h}s + \mathbf{u} \qquad (5)$$

wherein the s is an expected symbol, the **h** is a coefficient vector which will be multiplied with the expected symbol, the **u** is a vector representing the addition of all the interference and noise, which is assumed as zero mean Gaussian distribution and whose covariance is $\mathbf{Ru} = E[\mathbf{uu}^H]$, wherein $E[\cdot]$ represents to solve mathematical expectation.

In the GRAKE receiver, the weight of the combination of individual paths is:

$$\mathbf{w} = \mathbf{Ru}^{-1}\mathbf{h} \qquad (6)$$

wherein, the **Ru** represents a relevant matrix of all noises and interferences.

$$\mathbf{R}_u = E_0 \mathbf{R}_{ISI} + E_I \mathbf{R}_{MUI} + N_0 \mathbf{R}_n \qquad (7)$$

wherein,

$$\mathbf{R}_{ISI}(d_1, d_2) = \frac{1}{N^2} \sum_{l=0}^{L-1} \sum_{q=0}^{L-1} \sum_{i=-\infty}^{\infty} g_l g_q^* \sum_{m=1-N}^{N-1} (N - |m|) R_p(d_1 + mT_c - iN - \tau_l) R_p^*(d_2 + mT_c - iN - \tau_q) \qquad (8)$$

$$\mathbf{R}_{MUI}(d_1, d_2) = \frac{1}{N^2} \sum_{l=0}^{L-1} \sum_{q=0}^{L-1} \sum_{i=-\infty}^{\infty} g_l g_q^* \sum_{m=1-N}^{N-1} (N - |m|) R_p(d_1 + mT_c - iT - \tau_l) R_p^*(d_2 + mT_c - iT - \tau_q)(1 - \delta(m)\delta(i)) \qquad (9)$$

$$\mathbf{R}_n(d_1, d_2) = \frac{1}{N} \sum_{m=1-N}^{N-1} C_{0,0}(m) R_p(d_1 - d_2 + mT_c) \qquad (10)$$

wherein the $E_0$ is expected signal power, the $E_I$ is interference power, the $N_0$ is system white Gaussian noise power; the $N$ is a spreading factor of a target user, the $\mathbf{R}_{ISI}$ is inter-symbol interference, the $\mathbf{R}_{MUI}$ is multiple access interference, the $T_c$ is the duration of one spreading chip, the $g_l$ and the $g_q$ are the channel fading factor of the path $l$ and the path $q$ respectively, the $\tau_l$ and the $\tau_q$ are the multi-path propagation time delay of the path $l$ and the path $q$, the $L$ is the total number of effective paths, the $R_p$ is a self-relevant function of a sending pulse forming filter; and the $d_1$ and the $d_2$ are multi-path time delay corresponding to de-spreading paths.

The conventional RAKE receiver is equivalent to the best matching filter under the white Gaussian noise, which makes the process, regarding both the interference and the noise as the white noise. When an uplink of a WCDMA system is performing high-rate communication, it is no longer the best matching filtering. While the GRAKE receiver, regarding the interference as colored noise, counteracts a part of the multi-path interference using the correlation between the noise path interference and the multi-path interference by the method of adding noise paths, and achieves the effect of whitening the colored noise (interference), thus improving received SNR and obtaining good performance.

The multi-path time delay in the weight calculation formula of the GRAKE receiver includes two parts: one is real multi-path time delay which is output by a multi-path searching unit and referred to as the energy path; and the other part is false multi-path time delay which is generated for whitening the colored noise and referred to as the noise path. The time delay of the noise path is calculated based on the time delay of the energy path.

The present invention will be described in detail with reference to the drawings and in combination with embodiments hereinafter. It needs to be noted that the embodiments of the present invention and the features in the embodiments can be combined with each other if there is no conflict.

Method Embodiments

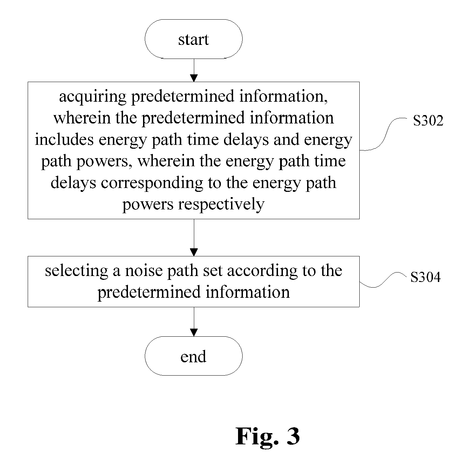

A method for selecting a noise path is provided according to an embodiment of the present invention. Fig. 3 is a flow chart of a method for selecting a noise path according to the embodiment of the present invention. As shown in Fig. 3, the method comprises the following steps S302 to S304.

Step S302, acquiring predetermined information, wherein the predetermined information includes energy path time delay and energy path power, wherein the energy path time delay corresponds to the energy path power respectively.

Step S304, selecting a noise path set according to the predetermined information, wherein the noise path set includes noise path time delay.

Preferably, Step S304 includes: sorting the energy path time delays according to the energy path power; and selecting the noise path set according to the sorting result and the predetermined information.

In the above, sorting the energy path time delays according to the energy path power in particular includes: sorting the energy path time delays according to the energy path power to obtain the sorted energy path time delays $d_E(1)......d_E(L)$, wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

Preferably, selecting the noise path set according to the sorting result and the predetermined information includes: a calculation and selection step of: *calculating* $\Delta=d_E(1)+d_E(n_1)-dE(n_2)$, adding the $\Delta$ into the noise path set in the case that the $\Delta$ meets a predetermined condition, wherein $n_1=1,n_2=1$ and the predetermined condition includes: an absolute value of the difference between the $\Delta$ and the energy path time delay or the noise path time delay in the noise path set is greater than or equal to a predetermined time delay difference; and a condition control step in which: if $n_2 > L$ or the number of elements in the noise path set is $N$, the condition control step is ended; otherwise, $n_1 =n_1+1$, if $n_1 > L$, then $n_2 = n_2+1$ and $n_1 =1$, and it returns to the calculation and selection step, and if $n_1 <= L$, then it returns to the calculation and selection step, wherein the N is the number of the noise paths required to be selected.

Preferably, the above predetermined time delay difference can be one chip.

The implementing process of the embodiment of the present invention will be described in detail in combination with examples hereinafter.

Example 1

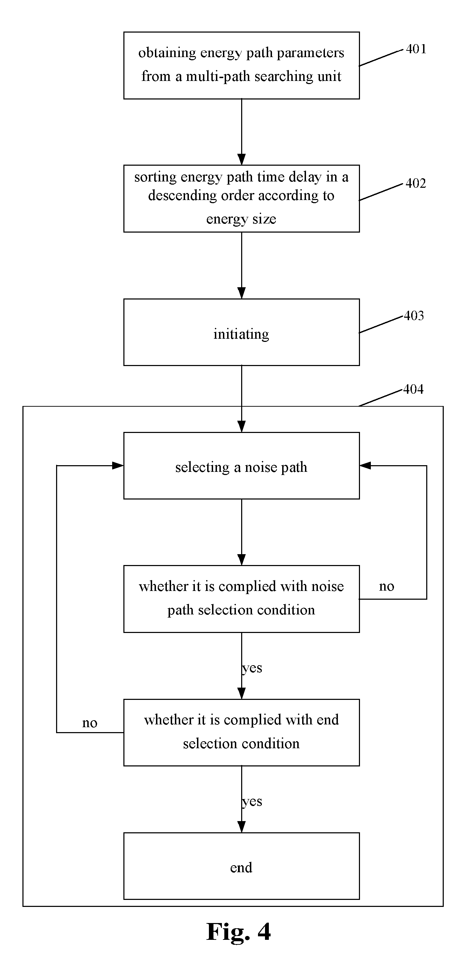

The specific process procedure of the above method will be described in detail in this example. Fig. 4 is a flow chart of a method for selecting a noise path according to the example 1 of the present invention. As shown in Fig. 4, the above method for selecting a noise path specifically comprises the following steps.

Step 401, obtaining energy path parameters from a multi-path searching unit, which include the time *delay* $d_E$ of $L$ energy paths and the power $P$ of the $L$ energy paths, and confirming the number $N$ of noise paths required to be selected. It needs to be noted that the number of the noise paths required to be selected can be configured flexibly according to practical situation, which will not be limited in the embodiments of the present invention.

Step 402, sorting the energy path time delays in descending order according to the energy size, i.e. $P(d_E(1))>P(d_E(2))>...>P(d_E(L))$.

Step 403, initiating $n_1 =1,n_2=1$.

Step 404, calculating $\Delta=d_E(1)+d_E(n_1)-d_E(n_2)$, wherein if the location of the $\Delta$ is not the location at which the energy path or the noise path exists (i.e., the value of the $\Delta$ is different from the time delay of the existing energy path or the time delay of the existing noise path), and they are separated by at least a predetermined time delay difference (i.e., the absolute value of the difference between the value of the $\Delta$ and the time delay of the existing energy path or the time delay of the noise path is greater than or equal to the predetermined time delay difference), then the $\Delta$ is selected to be added into a noise path set $d_N$ ; and setting $n_1 =n_1+1$, wherein if $n_1 > L$ , then $n_2 =n_2+1$ and $n_1 =1$; and if $n_2 > L$ or $N$ noise path(s) has (have) been selected to be added into the noise path set $d_N$, then it exits the calculation; otherwise, it repeats the flow of Step 404. It needs to be noted that the above predetermined time delay difference can be one chip, and this predetermined time delay difference can be set according to practical situation, and the value of this predetermined time delay difference will not be limited in the present invention.

Example 2

In this example, the process procedure of the GRAKE receiver will be described in detail, which includes the following steps:

1. obtaining energy path parameters from a multi-path searching unit, which include multi-path time delay and etc.;
2. obtaining a noise path time delay from a noise path selection unit by using the method for selecting a noise path provided in the example 1;
3. calculating a fading factor of an energy path according to the time delay of the energy path;
4. calculating a fading factor of the noise path using the fading factor of the energy path and the time delay of the noise path;
5. calculating a noise matrix $R_u$ using formulas (7), (8), (9), and (10);
6. calculating weight value $\omega$ of each path of the GRAKE receiver using formula (6); and
7. performing combination process on the multi-path data using the weight $\omega$ of individual paths.

The GRAKE receiver selects a noise path using the method provided by the embodiments of the present invention, which can effectively resist colored noise and improve the performance of the GRAKE receiver.

Apparatus Embodiments

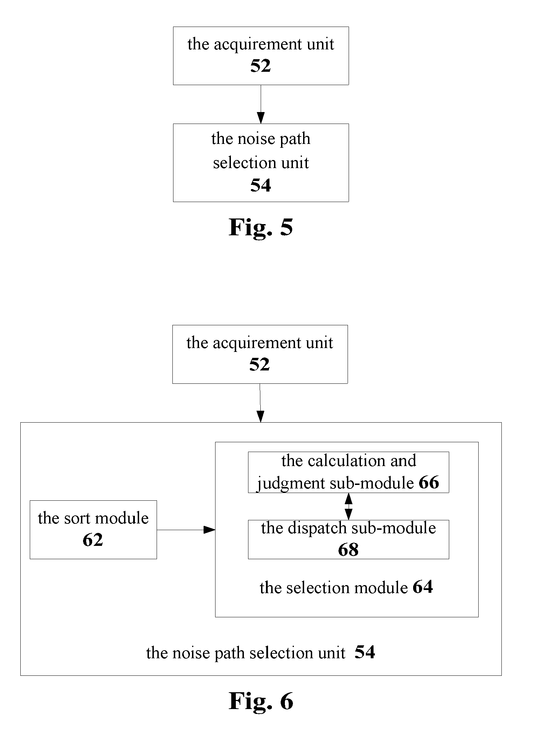

An apparatus for selecting a noise path is provided according to an embodiment of the present invention. Fig. 5 is a structural block diagram of an apparatus for selecting a noise path according to the embodiment of the present invention. As shown in Fig. 5, the apparatus comprises: an acquirement unit **52,** adapted to acquire predetermined information, wherein the predetermined information includes energy path time delay and energy path power, wherein the energy path time delay corresponds to the energy path power respectively; and a noise path selection unit **54,** connected to the acquirement unit **52** and adapted to select a noise path set according to the predetermined information acquired by the acquirement module, wherein the noise path set includes noise path time delay.

Fig. 6 is a detailed structural block diagram of the noise path selection unit according to an embodiment of the present invention. As shown in Fig. 6, the noise path selection unit **54** specifically includes: a sort module **62,** adapted to sort the energy path time delays according to the energy path power; and a selection module **64,** connected to the sort module ***62** and adapted to select the noise path set according to the sorting result and the predetermined information.

In the above, the sort module **62** is particularly adapted to sort the energy path time delays according to the energy path power to obtain the sorted energy path time delays $d_E (1)......d_E (L),$ wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

Preferably, the selection module **64** includes: a calculation and judgment sub-module **66,** adapted to calculate $\Delta =d_E(1)+d_E(n_1)-d_E(n_2)$, and add the $\Delta$ into the noise path set in the case that the $\Delta$ meets a predetermined condition, wherein $n_1 =_1,n_2=1$ and the predetermined condition includes that: absolute values of the $\Delta$, and the energy path time delay or the noise path time delay in the noise path set is greater than or equal to a predetermined time delay difference; and a dispatch sub-module **68,** connected to the calculation and judgment sub-module **66** and adapted to end the flow of the dispatch sub-module in the case that $n_2 > L$ or the number of elements in the noise path set is $N$; otherwise, $n_1 =n_1+1$, wherein if $n_2>L$, then $n_2 =n_2+1$ and $n_1 =1$, and it triggers the calculation and judgment sub-module **66**, and if $n_1 <= L$, then it triggers the calculation and judgment sub-module **66**, wherein the $N$ is the number of the noise paths required to be selected.

Preferably, the above predetermined time delay difference can be one chip.

It needs to be noted that the above apparatus is used for achieving the methods for selecting a noise path provided by the embodiments of the present invention, the particular implementation methods of which have already been described in detail in the method embodiments, which will not be described redundantly herein.

Example 3

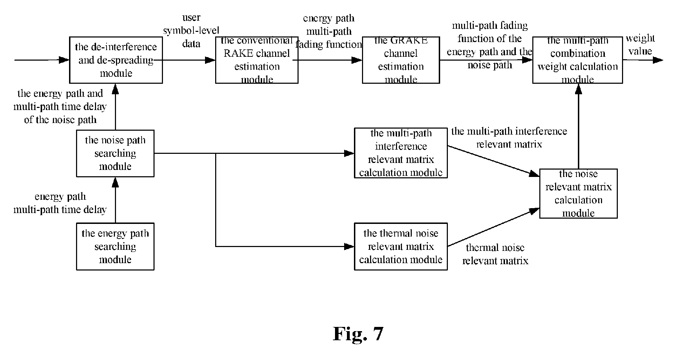

The GRAKE receiver applied in the apparatus provided by the embodiments of the present invention adopts the structure shown in Fig. 2, i.e. adopting the structure of the existing GRAKE receiver or the existing RAKE receiver. Fig. 7 is a structural schematic diagram of a weight calculation of the GRAKE receiver according to the embodiment of the present invention. The function and working flow of individual modules in this structure are as follows.

An energy path searching module obtains multi-path information of an energy path; an noise path selection module obtains the energy path and multi-path information of a noise path by the multi-path information of the energy path, and the function of the above noise path selection module corresponds to the function of the apparatus for selecting a noise path provided by the embodiments of the present invention; a de-interference and de-spreading module performs de-interference and de-spreading on antenna data by the energy path and the multi-path information of the noise path to obtain symbol level data of each user; a conventional RAKE channel estimation module obtains a multi-path fading function of the energy path; a GRAKE channel estimation module obtains multi-path fading functions of the noise path and the energy path; a multi-path interference relevant matrix calculation module calculates a multi-path interference relevant matrix; a thermal noise relevant matrix calculation module calculates a thermal noise relevant matrix; a noise relevant matrix is calculated in a noise relevant matrix module by the multi-path interference relevant matrix and the thermal noise relevant matrix; and a multi-path combination weight calculation module calculates GRAKE multi-path weight value by the multi-path fading factor and the noise matrix.

It needs to be noted that the steps shown in the flow charts of the drawings can be executed in a computer system of a set of computer executable instructions, and although the logical order is shown in the flow charts, the steps shown or described herein can be executed in an order different from this in some circumstances.

Apparently, those skilled in the art should understand that the above-mentioned modules and steps of the present invention can be realized by using general purpose calculation device, can be integrated in a single calculation device or distributed on a network which consists of a plurality of calculation devices, and alternatively they can be realized by using the executable program code of the calculation device, so that they can be stored in a storage device and executed by the calculation device, or they can be made into integrated circuit module respectively, or a plurality of modules or steps thereof can be made into a single integrated circuit module. Thus, the present invention is not limited to the combination of any specific hardware and software.

Above description is only used to illustrate the preferred embodiments rather than limit the present invention. To those skilled in the art, the present invention can have various alterations and changes. Any modification, equivalent substitution and improvement within the spirit and principle of the present invention should be included in the protection scope of the present invention.

**Claims**

1. A method for selecting a noise path, **characterized by** comprising:

    acquiring predetermined information, wherein the predetermined information comprises energy path time delays and energy path powers, wherein the energy path time delays correspond to the energy path powers respectively; and
    selecting a noise path set according to the predetermined information, wherein the noise path set comprises noise path time delays.

2. The method according to claim 1, **characterized in that** the step of selecting the noise path set according to the predetermined information comprises:

    sorting the energy path time delays according to the energy path power; and
    selecting the noise path set according to the result of the sorting and the predetermined information.

3. The method according to claim 2, **characterized in that** the step of sorting the energy path time delays according to the energy path power comprises:

    sorting the energy path time delays according to the energy path power to obtain the sorted energy path time delays $d_E(1)......d_E(L)$, wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

4. The method according to claim 3, **characterized in that** the step of selecting the noise path set according to the result of the sorting and the predetermined information comprises:

    a calculation and selection step: calculating $\Delta=d_E(1)+d_E(n_1)-d_E(n_2)$, adding the $\Delta$ into the noise path set in the case that the $\Delta$ meets a predetermined condition, wherein $n_1=1, n_2=1$ and the predetermined condition comprises: an absolute value of the difference between the $\Delta$ and the energy path time delay or the noise path time delay in the noise path set being greater than or equal to a predetermined time delay difference; and
    a condition control step: if $n_2 > L$ or the number of elements in the noise path set is $N$, ending the condition control step; otherwise, $n_1=n_1+1$, wherein if $n_1 > L$, then $n_2=n_2+1$ and $n_1=1$, and it returns to the calculation and selection step, and if $n_1 <= L$, it returns to the calculation and selection step,
wherein the $N$ is the number of the noise paths required to be selected.

5. The method according to claim 4, **characterized in that** the predetermined time delay difference is one chip.

6. An apparatus for selecting a noise path, **characterized by** comprising:

an acquirement unit, adapted to acquire predetermined information, wherein the predetermined information comprises energy path time delays and energy path powers, wherein the energy path time delays correspond to the energy path powers respectively; and
a noise path selection unit, adapted to select a noise path set according to the predetermined information acquired by the acquirement module, wherein the noise path set comprises noise path time delay.

7. The apparatus according to claim 6, **characterized in that** the noise path selection unit comprises:

a sort module, adapted to sort the energy path time delays according to the energy path power; and
a selection module, adapted to select the noise path set according to the result of the sorting and the predetermined information.

8. The apparatus according to claim 7, **characterized in that** the sort module is particularly adapted to sort the energy path time delays according to the energy path power to obtain the sorted energy path time delays $d_E(1)......d_E(L)$, wherein the $L$ is the number of the energy path time delays or the energy path powers, and $P(d_E(1))>P(d_E(2))>...>P(d_E(L))$, wherein $P(i)$ is the energy path power corresponding to the energy path time delay $i$.

9. The apparatus according to claim 8, **characterized in that** the selection module comprises:

a calculation and judgment sub-module, adapted to calculate $\Delta=d_E(1)+d_E(n_1)-d_E(n_2)$, and add the $\Delta$ into the noise path set in the case that the $\Delta$ meets a predetermined condition, wherein $n_1=1, n_2=1$ and the predetermined condition comprises: an absolute value of the difference between the $\Delta$ and the energy path time delay or the noise path time delay in the noise path set being greater than or equal to a predetermined time delay difference; and
a dispatch sub-module, adapted to end the flow of the dispatch sub-module in the case that $n_2 > L$ or the number of elements in the noise path set is $N$; otherwise, $n_1=n_1+1$, wherein if $n_1>L$, then $n_2=n_2+1$ and $n_1=1$, and it triggers the calculation and judgment sub-module, and if $n_1 <= L$, then it triggers the calculation and judgment sub-module, wherein the N is the number of the noise paths required to be selected.

10. The apparatus according to claim 9, **characterized in that** the predetermined time delay difference is one chip.

$x_0(t)$

$x_1(t)$

$x_{K-1}(t)$

multi-user

channel

$r(t)$

noise $n(t)$

## Fig. 1

multi-path 1

time delay
$d_1$

relevant

$y(d_1)$

$w_1^*$

multi-path 2

time delay
$d_2$

relevant

$y(d_2)$

$w_2^*$

$r(t)$

$z$

multi-path N

time delay
$d_N$

relevant

$y(d_N)$

$w_N^*$

## Fig. 2

start

acquiring predetermined information, wherein the predetermined information includes energy path time delays and energy path powers, wherein the energy path time delays corresponding to the energy path powers respectively

S302

selecting a noise path set according to the predetermined information

S304

end

**Fig. 3**

obtaining energy path parameters
from a multi-path searching unit — 401

sorting energy path time delay in a
descending order according to
energy size — 402

initiating — 403

— 404

selecting a noise path

whether it is complied with noise
path selection condition          no

yes

whether it is complied with end
selection condition          no

yes

end

**Fig. 4**

the acquirement unit
**52**

the noise path
selection unit
**54**

## Fig. 5

the acquirement unit
**52**

the sort module
**62**

the calculation and
judgment sub-module **66**

the dispatch sub-module
**68**

the selection module **64**

the noise path selection unit **54**

## Fig. 6

**Fig. 7**

# INTERNATIONAL SEARCH REPORT

| | International application No. |
|---|---|
| | PCT/CN2010/074790 |

**A. CLASSIFICATION OF SUBJECT MATTER**

H04J13/02(2006.01)i
According to International Patent Classification (IPC) or to both national classification and IPC

**B. FIELDS SEARCHED**

Minimum documentation searched (classification system followed by classification symbols)

H04J；H04B；H04Q

Documentation searched other than minimum documentation to the extent that such documents are included in the fields searched

Electronic data base consulted during the international search (name of data base and, where practicable, search terms used)

EPODOC,WPI,CPRS,CNKI: noise path, energy path, delay, power, Code Division Multiple Access, CDMA, rake, multipath, noise, SNR, signal to noise

**C. DOCUMENTS CONSIDERED TO BE RELEVANT**

| Category* | Citation of document, with indication, where appropriate, of the relevant passages | Relevant to claim No. |
|---|---|---|
| A | CN1695317A　(TELEFONAKTIEBOLAGET ERICSSON L M )09 Nov. 2005(09.11.2005) the whole document | 1-10 |
| A | CN1992542A (ZTE CORPORATION) 04 Jul. 2007(04.07.2007) the whole document | 1-10 |
| A | CN1490963A (HUAWEI TECHNOLOGIES CO LT) 21 Apr.2004(21.04.2004) the whole document | 1-10 |
| PX | CN101662310A (ZTE CORPORATION) 03.Mar. 2010(03.03.2010)　the whole document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 27 Sep. 2010(27.09.2010) | **21 Oct. 2010 (21.10.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **MA, Guili** Telephone No. (86-10)62411464 |
|---|---|

Form PCT/ISA /210 (second sheet) (July 2009)

## INTERNATIONAL SEARCH REPORT
Information on patent family members

International application No.

PCT/CN2010/074790

| Patent Documents referred in the Report | Publication Date | Patent Family | Publication Date |
|---|---|---|---|
| CN1695317A | 09.11.2005 | US2004066841A1 | 08.04.2004 |
| | | WO2004034595A2 | 22.04.2004 |
| | | AU2003293313A1 | 04.05.2004 |
| | | EP1547267A2 | 29.06.2005 |
| | | AU2003293313A8 | 03.11.2005 |
| CN1992542A | 04.07.2007 | NONE | |
| CN1490963A | 21.04.2004 | CN100337415C | 12.09.2007 |
| CN101662310A | 03.03.2010 | NONE | |

Form PCT/ISA/210 (patent family annex) (July 2009)